# EUROPEAN PATENT APPLICATION

(11) **EP 1 286 546 A1**
(43) Date of publication of application: **26.02.2003**
(21) Application number: 01118567.5
(22) Date of filing: 02.08.2001
(51) Int. Cl.: H04N 7/088, H04N 5/44

(54) **Television system allowing teletext windows repositioning**

(71) Applicant: Pace Micro Technology PLC, Saltaire, Shipley, BD14 3LF (GB)
(72) Inventor: Mountain, Dale, Bradford, West Yorkshire, BD15 9LB (GB)
(74) Representative: Wood, Graham

(57) **Abstract**

The invention which is the subject of this application relates to the ability to generate teletext displays such as, although not exclusively, subtitles, on a television screen and to ensure that the text can be viewable regardless of which of a number of possible display formats for the video data is selected by the user. A broadcast data receiver is connected to or provided integrally with the television set and receives video data and auxiliary data. The required position of the text, which is generated from the auxiliary data, with respect to the video data, is determined by the broadcast data receiver with respect to the television screen format and the display format selected, and either automatically, or provides the user with the option to, alter the position of the text with respect to the video data display to ensure that when the text and video display are generated for viewing the text is in a position which is viewable on the display screen.

## Description

The invention which is the subject of this application relates to the ability to generate teletext displays such as, although not exclusively, subtitles, on a television screen and to ensure that the text is viewable regardless of which of a number of possible display formats for the video data are selected by the user.

It is now possible for a video display to be shown via a television set screen, and increasingly via a television set which has wide screen capabilities, and for the display to be shown in a number of display ratios, the most common being either 4:3 or 16:9 ratios. The advent of a number of user selectable displays formats is generally advantageous to allow a user's preferences to be taken into account and some forms of material are more suited to particular display types than others.

The use of subtitles, and text displays in general, has also increased and this can be used to provide information for the deaf or hard of hearing, translations of foreign audio and/or general information to users.

One problem that is known to arise however is that in certain instances, the subtitles or text can wholly or partially be lost from view to the user via the television screen when a particular display format is selected. This is due to the fact that in some formats, portions of the video data which are available for display are required to be removed to suit a particular format and television screen size. This can means that these portions, such as, for example, the two sides and/or top and bottom of the display data are not shown so as to "fit" the display into the available display in the best manner. As part of this process, the text, such as subtitles, can also be removed if it has already been positioned with the video data for the display so as to be not viewable to the user. This therefore means that in certain formats, the text may not be seen at all or only partially and, this will be readily understood when one considers that subtitles in particular are typically shown at the bottom of the screen and are therefore vulnerable to be positioned in a portion of the display which is susceptible to being removed.

One attempt to solve this problem is disclosed in Patent EP662272. In this arrangement, the process of generating a display detects whether any subtitles will be detected in a non-display area for the display which is to be generated. The non-display area is typically therefore the portion which would be removed. If the subtitles are detected as being present in the non-display area when checking, typically on the basis of a check on the number of transitions in a scan line, this patent discloses shifting the subtitles to a displayed part of the picture. However, this patent requires the detection of subtitles in the analogue domain of a picture and proposes ways of shifting those signals into the viewable area. This in itself can be problematic and can require the addition of relatively expensive components and circuitry to achieve the result.

The aim of the present invention is to provide an alternative way of generating subtitles and ensuring that the subtitles can be viewed even when they may normally be removed due to a particular user's selected format. A further aim is to provide this benefit without the need for additional or expensive components and circuitry.

In a first aspect of the invention there is provided a television system, said system comprising a broadcast data receiver for the reception of data broadcast from a remote location and which data includes video, audio and/or auxiliary data, said broadcast data receiver provided as an integral part of, or connected to, a television set or display screen and said broadcast data receiver and/or television set provided with at least two video data display formats for the screen and characterised in that the auxiliary data includes data from which a text display can be generated on screen and the position of the generation of the text on the screen is determined by the broadcast data receiver with reference to the display format to which the broadcast data receiver is set at that instant and/or the type of television screen which is known or predicted by the broadcast data receiver.

Thus, in the present application, there is no need to attempt to detect the presence of subtitles in the video display, as instead, in this case, when subtitle data is received at the broadcast data receiver, the broadcast data receiver detects the format selected for display of the video data and then positions the subtitles in an appropriate location on the display so as to avoid the same being generated in an area which would not be shown on the television screen due to the format selected. Thus in this invention no monitoring of the actual position of the text in the display is required as the text has already been positioned in a correct position prior to display, by the broadcast data receiver.

Typically the formats which can be selected are a 4:3 picture or 16:9 picture.

In one embodiment, the broadcast data receiver refers to the setting for the display of wide screen video data which is received. If the user has selected the setting to a full screen format rather than a letterbox display format then the broadcast data receiver is controlled to assert that that the television set to which it is connected or is provided as an integral part of, has a wide screen television screen and is therefore capable of showing the widescreen format. This means that if the broadcast data receiver is set by the user to show a 4:3 ratio display picture on the wide screen television screen there is required to be the removal of the top and bottom portions of the video data with the remainder being shown to fit it into the wide screen television set screen. Thus in this instance, in addition to removing the portions, if there is text available and which is required to be viewed, perhaps as result of user selection, the broadcast data receiver will change the normal display position of the text to be displayed so that it does not appear within the portion of the video data which is to be removed.

Typically the text which is to be displayed is subtitle text and will therefore be moved so as to appear on the screen but typically will still be located towards the bottom of the screen display.

Specific embodiments of the invention will be described with reference to the accompanying diagrams, wherein:-
Figure 1 illustrates a 4:3 ratio display picture shown on a wide screen television set screen;
Figure 2 illustrates the display of the 4:3 ratio display picture on a 16:9 or wide screen television in an alternative format;
Figure 3 illustrates a further display format and shows how the video data can have portions removed to allow the subsequently generated video display to fit a wide screen display; and
Figure 4 illustrates a solution to the problem of Figure 3 in accordance with the invention.

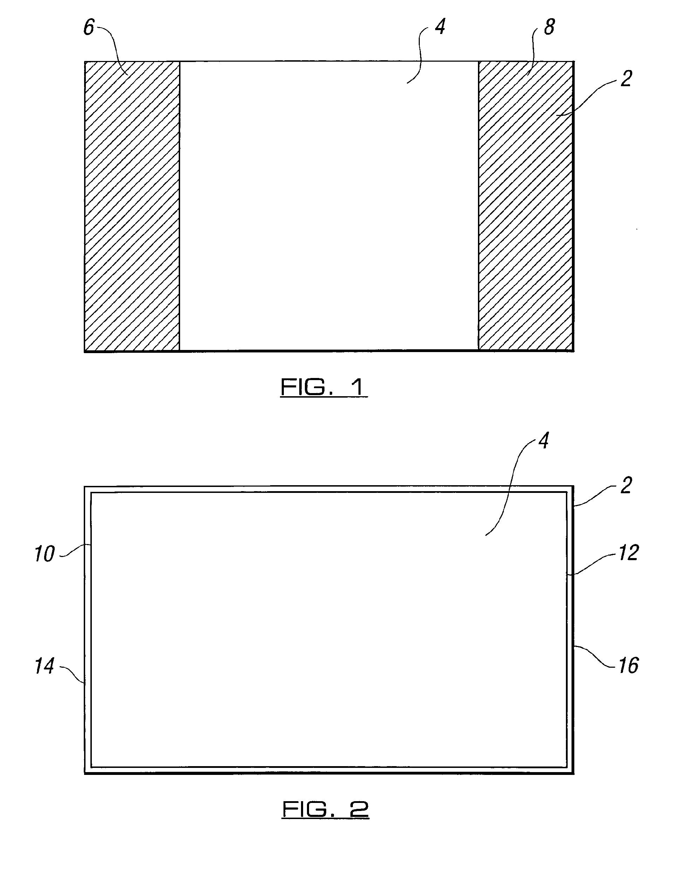

Referring to Figure 1, there is shown a wide screen television display 2. In this particular instance, the display which is being generated by the broadcast data receiver connected thereto is in a 4:3 display format. As the ratio of the display generated differs to the 16:9 or wide screen ratio of the television display there are a number of possible options as to how to deal with this problem as the display which is generated does not fit the screen on which the same is required to be viewed.

Figure 1 illustrates the first option wherein the video data display which is generated is indicated by the numeral 4 and the whole display is scaled down in size so that the top and bottom of the video display 4 fits into the top and bottom of the screen 2 and no data portions are removed. This however means that the display 4 does not extend across the width of the screen 2 and hence blank areas 6 and 8 are generated as shown.

Figure 2 illustrates an alternative format. In this case, all the video data display 4 is shown on the display screen 2 and the blank bars 6 and 8 are not present. In this format the display 4 is distorted so that the side edges 10 and 12 of the display are effectively stretched to meet the side edges 14 and 16 of the television set screen 2.

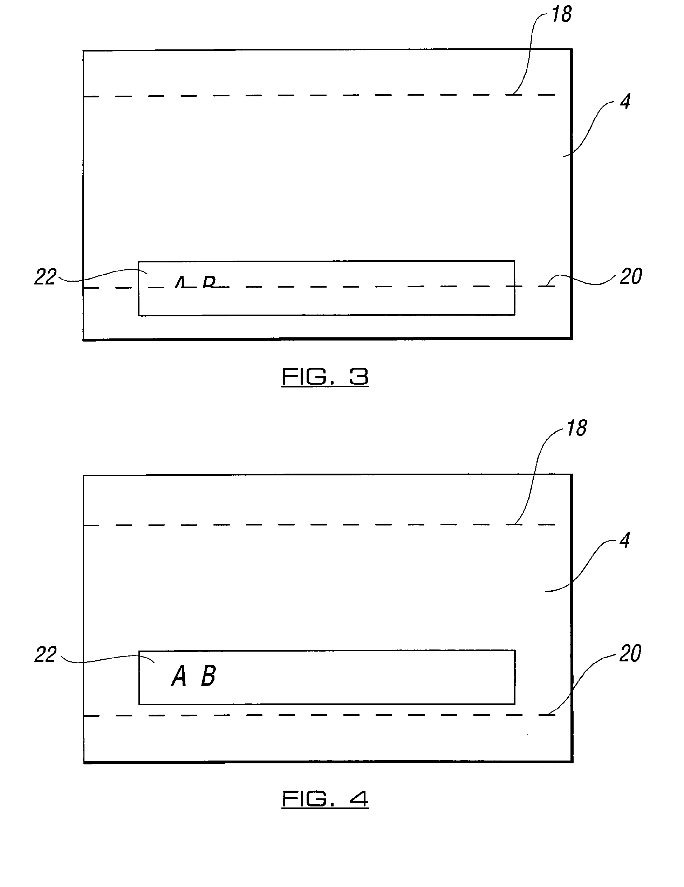

Figure 3 illustrates a 4:3 format display and illustrates how a further format commonly called "Zoom" can be used. In this format the portions of the display 4 data above the broken line 18 and below the broken line 20 is effectively removed from the display when it is generated on the screen so that the display shown on the screen 2, not shown in Figures 3 and 4 but represented by the broken lines 18, 20, will only be that area of the display between the broken lines 18 and 20. Normally, this form of display can be tolerated as it is unlikely that anything of great importance will normally be positioned at the top and bottom portions of the video display. However, on occasion, text such as subtitles are selected to be viewed, typically in a response to a user selection.

The subtitles are typically generated from auxiliary data received by the broadcast data receiver and are typically provided in a box such as that illustrated in Figures 3 and 4 by the reference numeral 22.

Figure 3 illustrates the conventional problem in that the subtitle box typically is positioned with respect to the 4:3 format picture so as to be at or adjacent to the bottom of the picture. However if the 4:3 picture has the portion removed below line 20, then a portion of the subtitles 22 are also removed when shown on the screen which is obviously undesirable.

Thus, in accordance with the invention, the broadcast data receiver connected to the display of a television set will either have been previously set with information that a wide screen television set screen is being used, or alternatively will identify the same in response to particular user selection of display formats. Thus, when a 4:3 display 4 is to be generated and the broadcast data receiver then receives information that the generation of subtitles and/or general text is required, the same can automatically move the text 22 to a position above the cutoff line 20 as shown in Figure 4 so as to ensure that even if the particular format of Zoom is selected by the user, then the subtitles will still be viewable.

Alternatively, the broadcast data receiver, rather than making the automatic change, is controlled to display a message to the user to indicate that any subtitle or text data may not be viewed in the particular format selected by the user. The user then has the option to ignore the message or alternatively can select that the text data is moved as described with respect to Figure 4.

Thus, if for example, a person is watching a programme which incorporates teletext subtitles, teletext data is sent to the receiver separately from the digital data and is then reinserted. If the broadcast data receiver detects that the format for display will mean that if the text data is reinserted on the video display in the normal position, it will not be seen on the screen, a message is generated on screen. The user can then select a text shift option and the data used for the reinsertion of the text moves the location of the text strings to be displayed to a higher position with respect to the video display so that when it is generated on the screen it will lie in the portion of the display data which is viewable.

The present invention therefore provides a solution to the conventional problem of not being able to view text without the need to incorporate elaborate and expensive display checking apparatus as with the conventional approach. Thus the text can be displayed in accordance with the invention in the appropriate position for viewing without the need to move the entire picture of the image and the text. In this invention only the text is moved with respect to the video display and prior to the display being generated on screen.

## Claims

1. A television system, said system comprising a broadcast data receiver for the reception of data broadcast from a remote location and which data includes video, audio and/or auxiliary data, said broadcast data receiver provided as an integral part of, or connected to, a television set or display screen and said broadcast data receiver and/or television set provided with at least two video data display formats for the screen and **characterised in that** the auxiliary data includes data from which a text display can be generated on screen and the position of the generation of the text on the screen is determined by the broadcast data receiver with reference to the display format to which the broadcast data receiver is set at that instant and/or the type of television screen which is known or predicted by the broadcast data receiver.

2. A television system according to claim 1 **characterised in that** if the text display data is present at the broadcast data receiver, the broadcast data receiver detects the format selected for display and then positions the subtitles in an appropriate location on the display so as to avoid being generated in an area which would not be shown on the television screen due to the display format selected.

3. A television system according to claim 1 **characterised in that** the text is generated for display on the screen and positioned with respect to the screen prior to display on the screen.

4. A television system according to claim 1 **characterised in that** the selectable display formats are a 4:3 ratio display picture or a 16:9 ratio display picture.

5. A television system according to claim 1 **characterised in that** the broadcast data receiver refers to the display setting for the display of wide screen video display data and if the setting is for a full screen display the broadcast data receiver asserts that the television set to which it is connected or is provided as an integral part of, has a wide screen television screen.

6. A television system according to claim 5 **characterised in that** if the broadcast data receiver is set to show a 4:3 ratio display picture this will result in top and bottom portions of the picture being unviewable to fit it into the wide screen television screen and whereupon the broadcast data receiver selects to position the text to be displayed with respect to the display picture so that it will appear in a viewable portion of the display picture on the television screen.

7. A television system according to claim 1 **characterised in that** the text to be displayed forms subtitles and is located towards the bottom of the screen display.
